# EUROPÄISCHE PATENTSCHRIFT

(11) **EP 2 042 665 B1**
(45) Veröffentlichungstag und Bekanntmachung des Hinweises auf die Patenterteilung: **17.08.2016**
(21) Anmeldenummer: 08021462.0
(22) Anmeldetag: 03.03.2004
(51) Int. Cl.: E04C 2/36, B32B 3/12, B32B 3/04, B32B 37/14

(54) **Verfahren und Vorrichtung zur Herstellung einer Leichtbauplatte**
Method and apparatus for manufacturing a lightweight building board
Procédé et dispositif pour la fabrication d'un panneau de construction léger

(30) Priorität: 24.03.2003 DE 10313055
(43) Veröffentlichungstag der Anmeldung: 01.04.2009
(62) Teilanmeldung aus: 04716599.8
(73) Patentinhaber: Homag Holzbearbeitungssysteme AG, 72296 Schopfloch (DE)
(72) Erfinder: Kalmbach, Kurt, 72275 Alpirsbach (DE); Weber, Hans Georg, 72160 Horb (DE)
(74) Vertreter: Hoffmann Eitle

(56) Entgegenhaltungen:
- EP-A1- 0 798 113
- EP-A2- 0 936 054
- DE-A1- 2 118 760
- DE-A1- 2 357 051
- DE-A1- 2 423 845
- US-A- 4 606 959
- US-A- 4 749 601
- US-A- 5 006 391
- US-A1- 2001 046 584

## Beschreibung

### Technisches Gebiet

Die vorliegende Erfindung betrifft ein Verfahren zur Herstellung einer Leichtblauplatte aus zwei die Plattenobersowie die Plattenunterseite bildenden dünnwandigen Decklagen und mindestens einer zwischen den Decklagen angeordneten und mit diesen verklebten Kernlage aus leichtem Füllmaterial. Ferner betrifft die Erfindung eine Vorrichtung zur Durchführung des Verfahrens.

### Stand der Technik

Leichtbauplatten der hier zur Diskussion stehenden Art werden zur Herstellung von Zimmertüren, Möbelelementen, Paneelelementen oder dergleichen eingesetzt. Die dünnwandigen Decklagen bestehen dabei meist aus einer Furnier-, Kunststoff- oder Metallplattenlage geringer Wandstärke, die auf die Außenseite der Kernlage aus leichtem Füllmaterial aufgeklebt wird.

Unter einer derartigen Kernlage wird eine Füllmateriallage verstanden, die weitgehend aus Stegen besteht, die untereinander verbunden sind und Hohlräume verschiedenster Form einschließen. Bevorzugt sind dabei waben- oder rohrartige Strukturen, die einerseits in Verbindung mit den Decklagen eine sehr hohe Festigkeit verleihen, andererseits - bezogen auf das Volumen - ein extrem niedriges Gewicht besitzen.

Derartige aus dünnen Decklagen und einer leichten Kernlage bestehende Leichtbauplatten werden bisher in der Weise hergestellt, dass die dünnen Decklagen getrennt voneinander einseitig maschinell mit einer Klebstoffschicht bestrichen und im Anschluss daran manuell die Kernlage mit ihrer einen Seite auf die Klebstoffschicht der einen Decklage aufgelegt und anschließend ebenfalls manuell die andere Decklage mit ihrer Klebstoffschicht auf die andere Seite der Kernlage aufgelegt wird. Die in dieser Weise nach Art einer Sandwichkonstruktion zusammengefügten Leichtbauplatten werden dann manuell übereinander gestapelt und dieser Stapel über eine gewisse Zeit mit einer Presskraft beaufschlagt.

Um die in der letzten Phase der oben beschriebenen Herstellungsweise auftretenden Verzugserscheinungen zu reduzieren und den Aushärtvorgang zu beschleunigen, werden sogenannte Mehretagenpressen eingesetzt, die unter Einsatz von Druck und Wärme der Klebstoffschicht die Feuchtigkeit oder das Lösungsmittel entziehen.

Als weiteres Dokument ist die EP 0 798 113 A1 bekannt, das ein Verfahren und eine Maschine zur Herstellung von plattenförmigen Werkstücken betrifft.

Ferner ist die DE 23 57 051 A1 zu nennen, die ein Verfahren und eine Vorrichtung zum Beschichten von Holz- oder Holzwerkstoffplatten mit abgerundeten Kanten betrifft. Dabei sollen die Abrundungen im Durchlaufverfahren mit einer möglichst geringen Anzahl von Arbeitsgängen hergestellt werden.

Eine weitere Druckschrift ist die DE 21 18 760 A1, die ein Verfahren zum Herstellen einer mindestens an einer Grundfläche und längs- und/oder querkantenseitig oberflächenbeschichteten Platte sowie eine Vorrichtung zum Herstellen von Gehrungsschnitten und Nuten an dieser Platte zeigt.

### Zusammenfassung der Erfindung

Aufgabe der vorliegenden Erfindung ist es, eine neuartige Verfahrensweise zu schaffen, durch die der manuelle Aufwand bei der Herstellung, die Verzugserscheinungen sowie der Klebstoffverbrauch reduziert werden können.

Diese Aufgabe wird erfindungsgemäß mit einem Verfahren gemäß Anspruch 1 gelöst

Gemäß der erfindungsgemäßen Verfahrensweise ist es vorgesehen, dass mindestens eine Ausnehmung in die Leichtbauplatte eingebracht, insbesondere eingefräst wird, und anschließend zumindest ein Abschnitt einer Decklage über die Ausnehmung derart verschwenkt wird, dass er eine Stirnseite der Leichtbauplatte bildet. Hierdurch sind keine zusätzlichen Kantenelemente erforderlich und die Leichtbauplatte erhält ein einheitliches, geschlossenes Erscheinungsbild. Gleichzeitig hat sich gezeigt, dass sich diese Vorgehensweise besonders rationell mit en vorhergehenden Schritten zur Herstellung der Leichtbauplatte kombinieren lässt.

Der Erfindung liegt der grundsätzliche Gedanke zugrunde, den manuellen Aufwand durch Einsatz einer kontinuierlich, d.h. im Durchlauf arbeitenden Fertigung zu reduzieren. Bei einer Fertigung im Durchlauf zeigt sich darüber hinaus in überraschender Weise, dass es im Gegensatz zur bisher angewendeten manuellen Fertigung möglich ist, mit relativ einfachen technischen Mitteln bei Einhaltung der erfindungsgemäßen Abfolge anstelle der Decklagenseiten die beiden Seiten der Kernlage mit einer Klebstoffschicht zu versehen. Handhabungsprobleme, die in einem solchen Falle bei einer manuellen Fertigung unvermeidbar wären, treten dabei nicht auf. Da der Flächenanteil der zu bestreichenden Kernlage aufgrund der waben- oder rohrartigen Struktur nur einen Bruchteil der Fläche der Decklagen beträgt, ergeben sich bei einer derartigen Verfahrensweise Klebstoffeinsparungen in einer bisher nicht erreichten Größenordnung.

Aufgrund des vergleichsweise geringen Klebstoffeinsatzes unterbleiben auch die bei manueller Fertigung auftretenden Verzugserscheinungen, da erheblich weniger Feuchtigkeit bzw. Lösungsmittel aus der Kernlage abgeführt werden muss.

Darüber hinaus eröffnet die Fertigung im Durchlauf erhebliche weitere Möglichkeiten für die Produktion. So können die Kernlagen automatisch auf Länge und Breite beschnitten und von der Rolle oder von einem Endlosstapel abgezogen werden. Auch können gegebenenfalls zusätzliche Arbeitsgänge im Verlaufe des Durchlaufs an den Decklagen, der Kernlage oder der fertigen Leichtbauplatte durchgeführt werden.

Von besonderer Bedeutung ist im vorliegenden Fall, dass sich die erfindungsgemäße Verfahrensweise zur Fertigung von Leichtbauplatten eignet, bei denen zumindest im Bereich von Längsstirnseiten der Lichtbauplatte mit den Decklagen verklebte Rahmenriegeln angeordnet sind. Für derartige Leichtbauplatten ist es erfindungsgemäß bevorzugt, dass im Durchlauf
- im Randbereich auf die erste Decklage und/oder eine der ersten Decklage zugewandten ersten Seite der Rahmenriegel eine Klebstoffschicht aufgebracht und die Rahmenriegel mit der ersten Decklage zusammengeführt werden,
- die Kernlage mit ihrer der ersten Decklage zugewandten und mit der Klebstoffschicht versehenen ersten Seite zwischen die Rahmenriegel eingeführt wird,
- auf die zweite Seite der Kernlage und eine zweite Seite der Rahmenriegel eine Klebstoffschicht aufgebracht und die zweite Decklage auf diese Klebstoffschicht aufgelegt wird, und
- die Decklagen mit der Kernlage und den Rahmenriegeln verpresst werden.

Hierdurch wird erfindungsgemäß ein Verfahren bereitgestellt, mittels dessen sich auch komplexere Leichtbauplatten, die eine innere Rahmenstruktur aufweisen, zügig und rationell im Durchlaufverfahren herstellen lassen.

Grundsätzlich kann die Klebstoffschicht in den einzelnen Herstellungsphasen der Leichtbauplatte in der verschiedensten Weise aufgebracht werden. Vorteilhaft ist es, die Klebstoffschicht durch Aufstreichen, Aufwalzen oder Aufsprühen aufzubringen.

Die Presskraft für das Verpressen in der letzten Phase des Herstellungsprozesses kann ebenso in verschiedenster Weise erzeugt werden. Für die Herstellung im Durchlauf eignet sich jedoch insbesondere eine Methode, bei der die Presskraft durch Walzendruck erzeugt wird.

Gemäß einer Weiterbildung ist vorgesehen, dass die Leichtbauplatte stirnseitig im Bereich der Querseiten mit Kanten versehen wird, die entweder in einem anschließenden Arbeitsgang im Durchlauf oder nach dem Abstapeln in einem separaten Arbeitsgang stationär erzeugt werden. Dabei ist es bevorzugt, dass die Kante mittels Aufleimen eines Kantenstreifens oder einer Vollholzkante auf eine oder beide der Stirnseiten gebildet wird. Gemäß einer alternativen Verfahrensweise ist vorgesehen, dass von zumindest einer Stirnseite der Leichtbauplatte her eine Aussparung in die Kernlage eingebracht wird, in die anschließend ein Rahmenquerriegel eingesetzt, insbesondere eingeklebt wird. Hierdurch erhält man bei einfacher Herstellung gleichzeitig einen stabilen Rahmen, welcher der Leichtbauplatte eine vergleichsweise hohe Steifigkeit verleiht.

Ferner ist es Aufgabe der vorliegenden Erfindung, eine möglichst einfach aufgebaute Vorrichtung zur Durchführung des Verranrens zu schaffen.

Diese Aufgabe wird erfindungsgemäß durch eine Vorrichtung mit den Merkmalen von Anspruch 8 gelöst. Diese basiert auf dem Gedanken, einer Fördereinrichtung derart mit mindestens einer an dieser angeordneten Bearbeitungsstation zu kombinieren, dass die Durchführung des erfindungsgemäßen Verfahrens rationell im Durchlauf möglich wird. Zu diesem Zweck ist erfindungsgemäß erste Bearbeitungsstation vorgesehen, die eine erste Beleimungsstation zum Aufbringen einer Klebstoffschicht auf eine erste Seite der Kernlage sowie eine Einführeinrichtung zum Zusammenführen der beleimten ersten Seite der Kernlage mit der ersten Decklage besitzt.

Gemäß einer Weiterbildung der vorliegenden Erfindung umfasst die Vorrichtung eine zweite Bearbeitungsstation, die eine zweite Beleimungsstation zum Aufbringen einer Klebstoffschicht auf die zweite Seite der Kernlage sowie eine Auflegeeinrichtung aufweist, über die die andere Decklage auf die Klebstoffschicht der Kernlage aufsetzbar ist, und eine dritte Bearbeitungsstation mit einer Presseinrichtung zum Ausüben einer einstellbaren Presskraft auf die Lagen der jeweiligen Leichtbauplatte. Hierdurch können die wesentlichen Verfahrensschritte mittels einer einzigen Vorrichtung rationell und zügig - im Durchlauf - durchgeführt werden.

Schließlich umfasst die Vorrichtung gemäß einer Weiterbildung der vorliegenden Erfindung eine der ersten Bearbeitungsstation vorgeschaltete Beleimungseinrichtung zum Aufbringen von Klebstoff auf die erste Decklage und/oder die erste Seite der Rahmenriegel sowie eine Rahmenriegelfördereinrichtung für das Zusammenführen der Rahmenriegel mit der ersten Decklage.

Diese Weiterbildung der Vorrichtung ermöglicht die rationelle Herstellung einer erfindungsgemäßen Leichtbauplatte, die zwischen den Decklagen neben der Kernlage auch Rahmenriegel aufweist. Dabei kann weiterhin ein zügiges Durchlaufverfahren sichergestellt werden.

### Kurze Beschreibung der Zeichnungen

Fig. 1 zeigt eine schematische, teilweise geschnittene Perspektivansicht einer Leichtbauplatte gemäß einer Ausführungsform der vorliegenden Erfindung;
Fig. 2 zeigt eine schematische Perspektivansicht einer Ausführungsform einer erfindungsgemäßen Vorrichtung zur Herstellung einer Leichtbauplatte;
Fig. 3 zeigt schematisch eine Ausführungsform der Bearbeitung der Stirnseite einer Leichtbauplatte, die nicht Teil der Erfindung ist;
Fig. 4a) bis Fig. 4c) zeigen schematisch eine erfindungsgemäße Ausführungsform der Bearbeitung der Stirnseite einer erfindungsgemäßen Leichtbauplatte;
Fig. 5 zeigt schematisch eine Ausführungsform zur Bearbeitung der Stirnseite einer Leichtbauplatte, die nicht Teil der Erfindung ist.

### Ausführliche Beschreibung bevorzugter Ausführungsformen

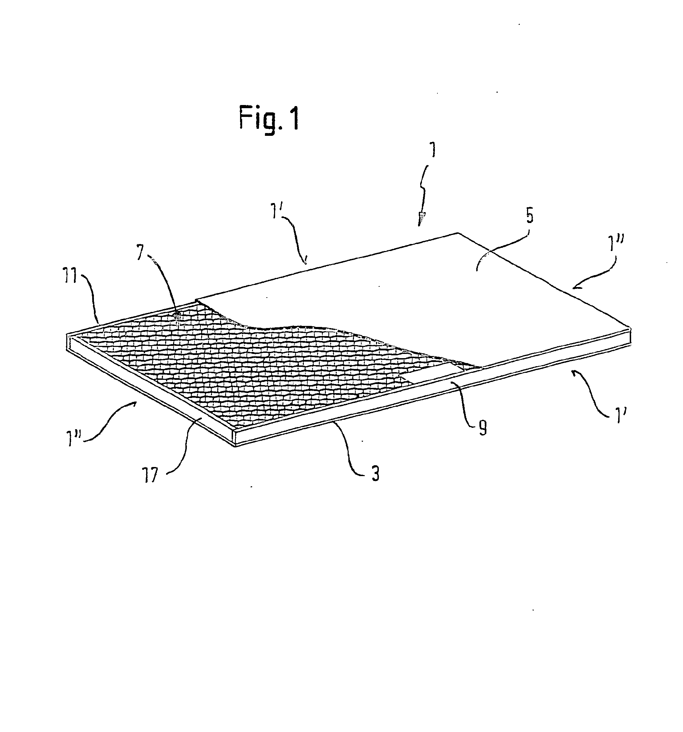

Bevorzugte Ausführungsformen der vorliegenden Erfindung werden nachfolgend ausführlich unter Bezugnahme auf Figur 1 bis 5 beschrieben.

Fig. 1 zeigt schematisch eine teilweise geschnittene Perspektivansicht einer Leichtbauplatte 1 gemäß einer bevorzugten Ausführungsform der vorliegenden Erfindung. Die Leichtbauplatte 1 besitzt zwei dünnwandige Decklagen 3, 5, die beispielsweise aus einer Furnier- Kunststoff- oder Metallplattenlage bestehen. Zwischen der ersten Decklage 3 und der zweiten Decklage 5 ist eine Kernlage 7 aus leichtem Füllmaterial angeordnet und mit den Decklagen 3, 5 verklebt.

Die Kernlage 7 besitzt eine wabenartige Struktur und einen entsprechend hohen Hohlraumanteil und kann beispielsweise aus Papier oder dergleichen hergestellt sein. Ferner sind zwischen der ersten Decklage 3 und der zweiten Decklage 5 Rahmenriegel 9, 11, die an den Längsstirnseiten 1' der Leichtbauplatte 1 gelegen sind, sowie Rahmenquerriegel 17, die an den Querstirnseiten 1" der Leichtbauplatte 1 gelegen sind, angeordnet.

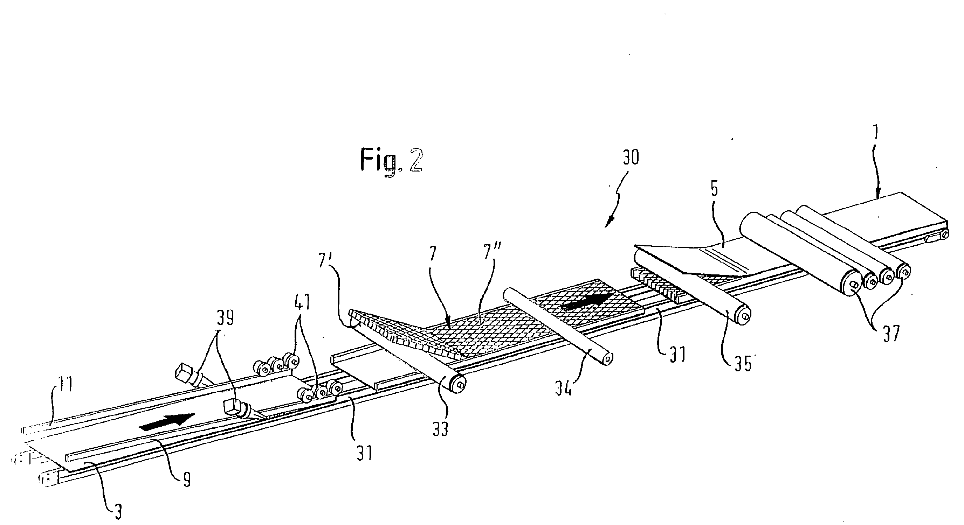

Fig. 2 zeigt schematisch eine bevorzugte Ausführungsform einer erfindungsgemäßen Vorrichtung zur Herstellung der in Fig. 1 gezeigten Leichtbauplatte 1. Die Vorrichtung umfasst eine Fördereinrichtung 31, beispielsweise in Form einer angetriebenen Rollenbahn, eines Bandförderers oder einer sonstigen geeigneten Einrichtung. Darüber hinaus weist die Vorrichtung 30 eine erste Bearbeitungsstation auf, die mit einer ersten Beleimungsstation 33 zum Aufbringen einer Klebstoffschicht auf eine erste Seite 7' der Kernlage 7 sowie einer Einführeinrichtung 34 zum Zusammenführen der beleimten ersten Seite 7' der Kernlage 7 mit der ersten Decklage 3.

In Förderrichtung hinter der ersten Bearbeitungsstation weist die Vorrichtung 30 eine zweite Bearbeitungsstation auf, die eine zweite Beleimungsstation 35 zum Aufbringen einer Klebstoffschicht auf eine zweite Seite 7" der Kernlage 7 sowie eine nicht gezeigte Auflegeeinrichtung aufweist, über die die zweite Decklage 5 auf die Klebstoffschicht der Kernlage 7 aufsetzbar ist.

Daran schließt sich in Transportrichtung eine dritte Bearbeitungsstation mit einer Presseinrichtung 37 in Form von Rollen bzw. Walzen an, die eine einstellbare Presskraft auf die Lagen 3, 5, 7 der jeweiligen Leichtbauplatte ausüben können.

Im Hinblick auf die Option, die Leichtbauplatte mit Rahmenriegeln 9, 11 zu versehen, weist die Vorrichtung 30 ferner eine der ersten Bearbeitungsstation vorgeschaltete Beleimungseinrichtung 39 zum Aufbringen von Klebstoff auf die erste Decklage 3 und/oder die erste Seite der Rahmenriegel 9, 11 sowie eine Rahmenriegelfördereinrichtung 41 für das Zusammenführen der Rahmenriegel 9 und 11 mit der ersten Decklage 3 auf. Es ist jedoch zu beachten, dass diese der ersten Bearbeitungsstation vorgeschalteten Einheiten lediglich eine bevorzugte Ausgestaltung der erfindungsgemäßen Vorrichtung darstellen und insbesondere zum Einsatz kommen, wenn die Leichtbauplatte 1 im Durchlauf mit den Rahmenriegeln 9, 11 versehen werden soll.

Der Betrieb der erfindungsgemäßen Vorrichtung 30 und das erfindungsgemäße Verfahren zur Herstellung der in Fig. 1 gezeigten Leichtbauplatte werden nachfolgend unter Bezugnahme auf Fig. 2 beschrieben. Eine erste Decklage 3 wird in Fig. 2 von links auf der Fördereinrichtung 31 eingefördert, wobei die in Fig. 2
gezeigten Pfeile die Durchlaufrichtung der ersten Decklage 3 sowie der übrigen Bauteile der herzustellenden Leichtbauplatte 1 angeben. Während des Durchlaufs wird im Randbereich auf die erste Decklage 3 mittels der Beleimungseinrichtung 39 eine Klebstoffschicht aufgebracht, während gleichzeitig die Rahmenriegel 9, 11 zugeführt werden. Im weiteren Verlauf erreichen die Rahmenriegel 9, 11 die Rahmenriegelfördereinrichtung 41, welche die Rahmenriegel 9, 11 mit der ersten Decklage 3 zusammenführt und im Bereich der Verleimung miteinander verpresst, sodass die Rahmenriegel 9, 11 fest mit der ersten Decklage 3 verbunden werden.

Im Anschluss daran erreicht die mit den Rahmenriegeln 9, 11 versehene erste Decklage 3 die erste Bearbeitungsstation mit der ersten Beleimungsstation 33. Im Bereich der ersten Beleimungsstation 33 wird von oben her die Kernlage 7 derart zugefördert, dass ihre erste Seite 7', d.h. in Fig. 2 ihre Unterseite, mit Leim versehen wird. Im Anschluss an den Beleimungsvorgang mittels der ersten Beleimungsstation 33 werden die Kernlage 7 und die erste Decklage 3 mittels der Einführeinrichtung 34 derart zusammengeführt, dass die beleimte erste Seite 7' der Kernlage 7 mit der ersten Decklage 3 verbunden wird und zwischen den Rahmenriegeln 9, 11 zum Liegen kommt.

Nun wird die mit den Rahmenriegeln 9, 11 und der Kernlage 7 versehene erste Decklage 3 zur zweiten Bearbeitungsstation mit der zweiten Beleimungsstation 35 weiter gefördert, wobei beim Passieren der zweiten Beleimungsstation 35 die zweite Seite 7" der Kernlage 7 sowie die oberen Stirnflächen der Rahmenriegel 9, 11 mit Klebstoff bestrichen werden. Gleichzeitig wird von oben her die zweite Decklage 5 in die Vorrichtung 30 eingefördert und kann bereits lose auf den Rahmenriegeln 9, 11 und der Kernlage 7 aufliegen. Die so gebildete Einheit erreicht schließlich die dritte Bearbeitungsstation mit der Presseinrichtung 37, wo mittels der in Fig. 2 gezeigten Walzen eine einstellbare Presskraft auf die jeweiligen Lagen der Leichtbauplatte 1 aufgebracht wird, und diese somit fest zu einer Einheit verbunden werden.

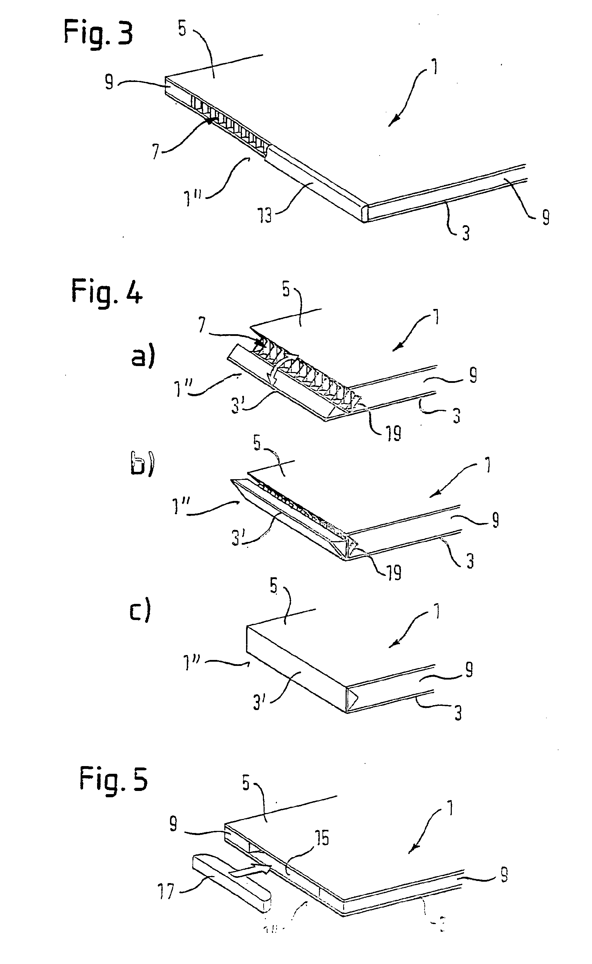

Nun kann die Leichtbauplatte 1 aus der Vorrichtung 30 ausgefördert werden und steht zur weiteren Bearbeitung zur Verfügung. Im Zuge der weiteren Bearbeitung kann die in längeren Abschnitten herstellbare Leichtbauplatte 1 beispielsweise jeweils auf die gewünschte Länge zugeschnitten werden oder im Bereich der Stirnflächen bearbeitet werden, was unten stehend ausführlich unter Bezugnahme auf die Figuren 3 bis 5 beschrieben wird.

Dabei ist zu beachten, dass das vorstehend beschriebene Verfahren im Wesentlichen im Durchlauf erfolgt, d.h. die Bauteile der Vorrichtung 30 sind während des Verfahrensablaufs im Wesentlichen stationär, und die Bauteile der herzustellenden Leichtbauplatte 1 werden mittels der Fördereinrichtung 31 durch die Vorrichtung 30 zur Bearbeitung hindurch bewegt. Hierdurch ergibt sich eine optimale Kombination einer vergleichsweise einfachen Vorrichtung 30 und eines zügigen und störungsfreien Verfahrensablaufs. Dabei ist es im Rahmen der Erfindung jedoch möglich, einzelne Verfahrensschritte nach Bedarf nicht in einem kontinuierlichen Durchlauf, sondern getaktet durchzuführen, d.h. die Werkstücke werden zumindest temporär angehalten, um bestimmte Verfahrensschritte einfacher oder mit höherer Präzision durchzuführen, beispielsweise das Auflegen der zweiten Decklage 5.

Die Figuren 3 bis 5 zeigen jeweils eine Ausführungsform zum Bearbeiten zumindest einer Stirnseite 1" der vorstehend beschriebenen Leichtbauplatte 1. Bei der in Fig. 3 gezeigten Ausführungsform wird die Leichtbauplatte 1 im Bereich der Stirnseite 1" mit einem Kantenstreifen 13 versehen, der beispielsweise aus Kunststoff, Vollholz oder dergleichen bestehen und auf die Stirnseite der Leichtbauplatte 1 aufgeleimt werden kann.

Bei der in Figuren 4a bis 4c gezeigten, erfindungsgemäßen Ausführungsform ist kein separates Bauteil für die Stirnseite 1" der Leichtbauplatte 1 erforderlich. Vielmehr wird bei dieser Ausführungsform im Bereich der Stirnseite 1" der Leichtbauplatte 1 mindestens eine Ausnehmung 19 eingebracht, beispielsweise eingefräst, um anschließend zumindest einen durch die Ausnehmung begrenzten Abschnitt 3' der unteren Decklage 3 (vgl. Fig. 4a) derart zu verschwenken (vgl. Fig. 4b), dass der Abschnitt 3' selbst die Stirnseite 1" der Leichtbauplatte 1 bildet (vgl. Fig. 4c). Hierdurch ergibt sich bei einer einfachen und rationellen Herstellung ein besonders ansprechendes und geschlossenes Erscheinungsbild der erfindungsgemäßen Leichtbauplatte 1.

Bei der in Fig. 5 gezeigten Ausführungsform wird von zumindest einer Stirnseite 1" der Leichtbauplatte 1 eine Aussparung 15 in die Kernlage 7 eingebracht, und in diese Aussparung wird anschließend ein Rahmenquerriegel 17 eingesetzt, und insbesondere auch eingeklebt. Hierdurch erhält die Leichtbauplatte 1 eine umlaufende Rahmenkonstruktion, die der Leichtbauplatte 1 eine besondere Steifigkeit bei geringem Gewicht verleiht.

## Patentansprüche

1. Verfahren zur Herstellung einer Leichtbauplatte (1) mit zwei dünnwandigen Decklagen (3, 5) und mindestens einer zwischen den Decklagen (3, 5) angeordneten und mit diesen verklebten Kernlage (7) aus leichtem Füllmaterial,
bei welchem Verfahren im Durchlauf
- auf eine erste Seite (7') der Kernlage (7) eine Klebstoffschicht aufgebracht und die erste Seite (7') der Kernlage (7) mit einer ersten Decklage (3) zusammengeführt wird,
- auf eine zweite Seite (7'') der Kernlage (7) eine Klebstoffschicht aufgebracht und die zweite Seite (7'') der Kernlage (7) mit einer zweiten Decklage (5) zusammengeführt wird, und
- die Decklagen (3, 5) mit der Kernlage (7) verpresst werden,
**dadurch gekennzeichnet, dass** mindestens eine Ausnehmung (19) in die Leichtbauplatte (1) eingebracht, insbesondere eingefräst wird, und anschließend zumindest ein Abschnitt (3') einer Decklage über die Ausnehmung (19) derart verschwenkt wird, dass er eine Stirnseite (1'') der Leichtbauplatte bildet.

2. Verfahren nach Anspruch 1 zur Herstellung einer Leichtbauplatte (1) mit zumindest im Bereich von Längsstirnseiten (1') der Leichtbauplatte (1) angeordneten, mit den Decklagen (3, 5) verklebten Rahmenriegeln (9, 11),
**dadurch gekennzeichnet, dass**
im Durchlauf
- im Randbereich auf die erste Decklage (3) und/oder eine der ersten Decklage (3) zugewandten ersten Seite der Rahmenriegel (9, 11) eine Klebstoffschicht aufgebracht und die Rahmenriegel (9, 11) mit der ersten Decklage (3) zusammengeführt werden,
- die Kernlage (7) mit ihrer der ersten Decklage (3) zugewandten und mit der Klebstoffschicht versehenen ersten Seite (7') zwischen die Rahmenriegel (9, 11) eingeführt wird,
- auf die zweite Seite (7'') der Kernlage (7) und eine zweite Seite der Rahmenriegel (9, 11) eine Klebstoffschicht aufgebracht und die zweite Decklage (5) auf diese Klebstoffschicht aufgelegt wird, und
- die Decklagen (3, 5) mit der Kernlage (7) und den Rahmenriegeln (9, 11) verpresst werden.

3. Verfahren nach Anspruch 1 oder 2, **dadurch gekennzeichnet, dass** die Klebstoffschicht durch Aufstreichen, Aufwalzen oder Aufsprühen aufgebracht wird.

4. Verfahren nach einem der vorhergehenden Ansprüche, **dadurch gekennzeichnet, dass** beide Seiten (7', 7'') der Kernlage (7) simultan jeweils mit der Klebstoffschicht versehen werden.

5. Verfahren nach einem der vorhergehenden Ansprüche, **dadurch gekennzeichnet, dass** die Presskraft für das Verpressen durch Walzendruck erzeugt wird.

6. Verfahren nach einem der vorhergehenden Ansprüche, **dadurch gekennzeichnet, dass** zumindest eine Stirnseite (1'') der Leichtbauplatte (1) mit einem Kantenstreifen (13) versehen wird.

7. Verfahren nach einem der vorhergehenden Ansprüche,
**dadurch gekennzeichnet, dass** von zumindest einer Stirnseite (1'') der Leichtbauplatte (1) her eine Aussparung (15) in die Kernlage (7) eingebracht wird, in die anschließend ein Rahmenquerriegel (17) eingesetzt, insbesondere eingeklebt wird.

8. Vorrichtung (30) zur Durchführung des Verfahrens nach einem der Ansprüche 1 bis 7, mit einer Fördereinrichtung (31) und mindestens einer an dieser angeordneten Bearbeitungsstation, wobei
eine erste Bearbeitungsstation vorgesehen ist, die eine erste Beleimungsstation (33) zum Aufbringen einer Klebstoffschicht auf eine erste Seite (7') der Kernlage (7) sowie eine Einführeinrichtung (34) zum Zusammenführen der beleimten ersten Seite (7') der Kernlage (7) mit der ersten Decklage (3) besitzt.
**dadurch gekennzeichnet, dass** die Vorrichtung ferner eine Station, insbesondere eine Frässtation, zum Einbringen mindestens einer Ausnehmung (19) in die Leichtbauplatte (1), und eine Schwenkstation zum Verschwenken zumindest eines Abschnitts (3') einer Decklage über die Ausnehmung (19) derart, dass er eine Stirnseite (1'') der Leichtbauplatte bildet, aufweist.

9. Vorrichtung nach Anspruch 8, **dadurch gekennzeichnet, dass**
sie eine zweite Bearbeitungsstation aufweist, die eine zweite Beleimungsstation (35) zum Aufbringen einer Klebstoffschicht auf die zweite Seite (7'') der Kernlage (7) sowie eine Auflegeeinrichtung aufweist, über die die zweite Decklage (5) auf die Klebstoffschicht der Kernlage (7) aufsetzbar ist, und
eine dritte Bearbeitungsstation mit einer Presseinrichtung (37) zum Ausüben einer einstellbaren Presskraft auf die Lagen (3, 5, 7) der jeweiligen Leichtbauplatte (1) aufweist.

10. Vorrichtung nach Anspruch 8 oder 9, ferner mit
einer der ersten Bearbeitungsstation vorgeschalteten Beleimungseinrichtung (39) zum Aufbringen von Klebstoff auf die erste Decklage (3) und/oder die erste Seite der Rahmenriegel (9, 11) sowie einer Rahmenriegelfördereinrichtung (41) für das Zusammenführen der Rahmenriegel (9, 11) mit der ersten Decklage (3).

## Claims

1. Method for the manufacture of a lightweight building board (1) having two thinwalled surface layers (3, 5) and at least one core layer (7) made of lightweight filling material disposed between the surface layers (3, 5) and adhered thereto,
in which method in continuous operation
- an adhesive layer is applied to a first side (7') of the core layer (7) and the first side (7') of the core layer (7) is joined to a first surface layer (3),
- an adhesive layer is applied to a second side (7") of the core layer (7) and the second side (7") of the core layer (7) is joined to a second surface layer (5), and
- the surface layers (3, 5) are pressed together with the core layer (7),
**characterised in that** at least one recess (19) is formed in the lightweight building board (1), in particular cut in, and then at least one section (3') of one surface layer is swivelled over the recess (19) in such a way as to form one end face (1") of the lightweight building board.

2. Method according to claim 1 for the manufacture of a lightweight building board (1) having horizontal frame members (9, 11) disposed at least in the region of longitudinal end faces (1') of the lightweight building board (1) and adhered to the surface layers (3, 5),
**characterised in that**
in continuous operation
- in the edge region an adhesive layer is applied to the first surface layer (3) and/or a first side of the horizontal frame members (9, 11) facing towards the first surface layer (3), and the horizontal frame members (9, 11) are joined to the first surface layer (3),
- the core layer (7) is introduced by its first side (7'), which faces towards the first surface layer (3) and is provided with the adhesive layer, between the horizontal frame members (9, 11),
- an adhesive layer is applied to the second side (7") of the core layer (7) and a second side of the horizontal frame members (9, 11), and the second surface layer (5) is laid on this adhesive layer, and
- the surface layers (3, 5) are pressed together with the core layer (7) and the horizontal frame members (9, 11).

3. Method according to claim 1 or 2, **characterised in that** the adhesive layer is applied by brushing on, rolling on or spraying on.

4. Method according to any of the preceding claims, **characterised in that** the two sides (7', 7") of the core layer (7) are simultaneously each provided with the adhesive layer.

5. Method according to any of the preceding claims, **characterised in that** the pressure for pressing is generated by roller pressure.

6. Method according to any of the preceding claims, **characterised in that** at least one end face (1") of the lightweight building board (1) is provided with an edge strip (13).

7. Method according to any of the preceding claims, **characterised in that** from at least one end face (1") of the lightweight building board (1) a recess (15) is formed in the core layer (7), in which a transverse frame member (17) is then inserted, in particular glued in.

8. Apparatus (30) for carrying out the method according to any of claims 1 to 7, having a conveying device (31) and at least one processing station disposed thereon, wherein
a first processing station is provided, which has a first gluing station (33) for applying an adhesive layer to a first side (7') of the core layer (7) as well as an insertion device (34) for joining the glued first side (7') of the core layer (7) to the first surface layer (3),
**characterised in that** the apparatus further has a station, in particular a cutting station, for forming at least one recess (19) in the lightweight building board (1), and a swivel station for swivelling at least one section (3') of a surface layer over the recess (19) in such a way as to form one end face (1") of the lightweight building board.

9. Apparatus according to claim 8, **characterised in that**
it has a second processing station which has a second gluing station (35) for applying an adhesive layer to the second side (7") of the core layer (7) as well as a laying device by means of which the second surface layer (5) can be placed on the adhesive layer of the core layer (7), and
a third processing station with a pressing device (37) for exerting a variable pressure on the layers (3, 5, 7) of the respective lightweight building board (1).

10. Apparatus according to claim 8 or 9, further having
a gluing device (39) mounted in front of the first processing station for applying adhesive to the first surface layer (3) and/or the first side of the horizontal frame members (9, 11) as well as a horizontal frame member conveying device (41) for joining the horizontal frame members (9, 11) to the first surface layer (3).

## Revendications

1. Procédé de fabrication d'un panneau de construction légère (1) comportant deux couches de couverture (3, 5) à paroi mince et au moins une couche centrale (7) qui est en un matériau de remplissage léger et qui est placée entre les couches de couverture (3, 5) et collée à celles-ci,
procédé selon lequel lors du cycle de travail
- on applique une couche adhésive sur un premier côté (7') de la couche centrale (7) et on assemble le premier côté (7') de la couche centrale (7) à une première couche de couverture (3),
- on applique une couche adhésive sur un deuxième côté (7") de la couche centrale (7) et le deuxième côté (7") de la couche centrale (7) est assemblée avec une deuxième couche de couverture (5), et
- on presse les couches de couverture (3, 5) avec la couche centrale (7),
**caractérisé par le fait que** l'on pratique au moins un évidement (19) dans le panneau de construction légère (1), notamment en le fraisant, et on fait ensuite pivoter au moins une partie (3') d'une couche de couverture au-dessus de l'évidement (19) de manière à ce qu'elle forme un côté frontal (1") du panneau de construction légère.

2. Procédé selon la revendication 1, pour la fabrication d'un panneau de construction légère (1) avec des traverses de cadre (9, 11) qui sont placées au moins dans la zone des côtés frontaux longitudinaux (1') du panneau de construction légère (1) et qui sont collées aux couches de couverture (3, 5),
**caractérisé par le fait que** :
lors du cycle de travail
- au bord on applique une couche adhésive sur la première couche de couverture (3) et/ou sur un premier côté, proche de la couche de couverture (3), des traverses de cadre (9, 11) et on assemble les traverses de cadre (9, 11) à la première couche de couverture (3),
- on introduit la couche centrale (7), avec son côté (7'), proche de la première couche de couverture (3) et muni de la couche adhésive, entre les traverses de cadre (9, 11),
- on applique une couche adhésive sur le deuxième côté (7") de la couche centrale (7) et sur un deuxième côté des traverses de cadre (9, 11) et on pose la deuxième couche de couverture (5) sur cette couche adhésive, et
- on presse les couches de couverture (3, 5) avec la couche centrale (7) et avec les traverses de cadre (9, 11).

3. Procédé selon la revendication 1 ou 2, **caractérisé en ce que** l'on applique la couche adhésive à la brosse, au rouleau ou par aspersion.

4. Procédé selon l'une des revendications précédentes, **caractérisée en ce que** l'on applique la couche adhésive simultanément sur chacun des deux côtés (7', 7") de la couche centrale (7).

5. Procédé selon l'une des revendications précédentes, **caractérisé en ce que** l'on produit la force nécessaire au pressage par passage entre des rouleaux.

6. Procédé selon l'une des revendications précédentes, **caractérisé en ce que** l'on munit d'un chant (13) au moins un côté frontal (1") du panneau de construction légère (1).

7. Procédé selon l'une des revendications précédentes, **caractérisé en ce que**, à partir d'au moins un côté frontal (1") du panneau de construction légère (1), on pratique dans la couche centrale (7) un évidement (15) dans lequel on place ensuite une traverse de cadre (17), notamment en la collant.

8. Dispositif (30) pour la mise en oeuvre du procédé selon l'une des revendications 1 à 7, avec un dispositif de transport (31) et au moins un des postes d'usinage y associés, dans lequel :
- un premier poste d'usinage est prévu, qui comporte un dispositif d'encollage (33) pour appliquer une couche adhésive sur un premier côté (7') de la couche centrale (7) ainsi qu'un dispositif d'introduction (34) pour assembler le premier côté encollé (7') de la couche centrale (7) à la première couche de couverture (3),
**caractérisé par le fait que** le dispositif comporte en outre un poste, en particulier un poste de fraisage, pour pratiquer au moins un évidement (19) dans le panneau de construction légère (1), et un poste de pivotement pour faire pivoter au moins une partie (3') d'une couche de couverture au-dessus de l'évidement (19), de manière à ce qu'elle forme un côté frontal (1") du panneau de construction légère.

9. Dispositif selon la revendication 8, **caractérisé par le fait qu'**il comporte :
- un deuxième poste d'usinage qui comporte un deuxième dispositif d'encollage (35) pour appliquer une couche adhésive sur le deuxième côté (7") de la couche centrale (7) ainsi qu'un dispositif d'appui, par l'intermédiaire duquel la deuxième couche de couverture (5) peut être posée sur la couche adhésive de la couche centrale (7), et
- un troisième poste d'usinage avec un dispositif de pressage (37) pour exercer une force de pressage réglable sur les couches (3, 5, 7) du panneau de construction légère (1) considéré.

10. Dispositif selon la revendication 8 ou 9, comprenant en outre un dispositif d'encollage (39) associé au premier poste d'usinage pour appliquer un adhésif sur la première couche de couverture (3) et/ou sur le premier côté des traverses de cadre (9, 11) ainsi qu'un dispositif de transport de traverses de cadre (41) pour assembler les traverses de cadre (9, 11) à la première couche de couverture (3).
